## Europäisches Patentamt
## European Patent Office
## Office européen des brevets

(19)

(11) Publication number: **0 124 244**
**B1**

(12)

# EUROPEAN PATENT SPECIFICATION

(45) Date of publication of patent specification: **09.12.87**

(51) Int. Cl.⁴: **B 29 C 45/02, H 01 L 21/56**

(21) Application number: **84301989.4**

(22) Date of filing: **23.03.84**

(54) **Transfer moulding method and apparatus.**

(30) Priority: **31.03.83 JP 55861/83**

(43) Date of publication of application:
**07.11.84 Bulletin 84/45**

(45) Publication of the grant of the patent:
**09.12.87 Bulletin 87/50**

(84) Designated Contracting States:
**DE FR GB**

(56) References cited:
**EP-A-0 070 320**
**DE-A-3 036 441**

**Patent Abstracts of Japan vol. 6, no.246, 4
December 1982
PLAST-VERARBEITER, vol. 33, no. 4, April 1982,
Speyer/Rhein, BRD "Messen des
Werkzeuginnendrucks", pages 323-324**

(73) Proprietor: **FUJITSU LIMITED**
**1015, Kamikodanaka Nakahara-ku
Kawasaki-shi Kanagawa 211 (JP)**

(72) Inventor: **Murakami, Yoji
57-11 Aza Tsutsumi Tsuruga Ikkimachi
Aizuwakamatsu-shi Fukushima 965 (JP)**

(74) Representative: **Rackham, Stephen Neil et al
GILL JENNINGS & EVERY 53-64 Chancery Lane
London WC2A 1HN (GB)**

## Description

The present invention relates to a transfer moulding process and to an apparatus to carry out the process, which is used for mould-sealing semiconductor devices.

Semiconductor devices such as transistors, integrated circuits (IC), and large-scale integrated circuits (LSI) are sealed for protection against changes in temperature, humidity, and other external conditions, and against breakage or changes in inherent characteristics due to mechanical vibration or shock. In current practice, semiconductor devices are hermetically sealed using either metal and ceramic materials or plastics packages composed of thermosetting resins such as epoxy resin or a silicone compound. Of these, the plastics package method is predominant.

In the plastics package method, a transfer moulding apparatus is used. A lead frame bearing a chip is placed in a mould cavity, then molten plastics resin is injected into the mould under pressure by a plunger operated by a hydraulic device.

One example of a prior art transfer moulding method for moulding articles from a thermosetting resin in a mould having a plurality of cavities and a pot in communication with the cavities is disclosed in DE—A—3036441 and this method comprises the steps of:

charging a thermosetting plastics resin into the pot;

transferring the thermosetting plastics resin from the pot to each of the cavities by applying a pressure to the resin by means of a plunger which is movable in the pot;

directly detecting the internal pressure of the resin by detecting means; and,

altering the pressure applied to the plunger to move it in the pot in response to the internal pressure of the resin detected by the detecting means.

The apparatus disclosed in DE—A—3036441 comprises

a mould having a plurality of cavities and a pot in communication with the cavities;

a plunger movable in the pot for pressurising thermosetting plastics resin charged into the pot and transferring the resin to the cavities;

driving means for applying a pressure to the plunger;

a pressure detector for detecting the internal pressure of the resin; and,

means for altering the pressure applied to the plunger by the driving means in response to a signal from the detector.

During this method and using this apparatus the pressure of the plastics resin as it enters the cavity is decreased in response to the signal from the pressure detector so that the resin is held in the pot at a pressure below its transfer pressure. Further the pressure of the plastics resin decreases due to leakage or friction between the mould and the plunger. The decrease in pressure results in voids and other defects inside the product and a poor surface quality of the product.

According to a first aspect of this invention a transfer moulding method of the type above is characterised in that the internal pressure of the resin is directly detected in the pot by the detecting means and the pressure applied to the plunger is varied upwards or downwards as necessary to compensate for friction between the plunger and the wall of the pot and maintain the internal pressure of the resin in the pot substantially constant during the transferring step.

According to a second aspect of this invention a transfer moulding apparatus of the type above is characterised in that the detector detects the internal pressure of the resin in the pot and the means for altering the pressure applied to the plunger to control means which adjusts the pressure applied to the plunger upwards or downwards in dependence upon the pressure detected by the detector to compensate for friction between the plunger and the wall of the pot and maintain the internal pressure of the resin in the pot substantially constant while it is being transferred by movement of the plunger.

A particular embodiment of a method and apparatus in accordance with this invention will now be described and contrasted with the prior art with reference to the accompanying drawings; in which:—

Figure 1 is a plan of a lead frame placed in a mould cavity;

Figure 2 is a perspective view of a mould-sealed type semiconductor device package;

Figure 3 is a schematic cross-sectional view of a transfer moulding apparatus;

Figure 4 is a cross-section through a portion of a conventional transfer moulding apparatus including an injection plunger;

Figure 5 is a graph showing the relationship between the pressure applied to the resin and the pressure loss for a series of conventional moulding shots;

Figure 6 is a partly diagrammatic partially sectional view of an automatic transfer moulding apparatus for carrying out the method according to the present invention; and,

Figure 7 is a graph showing the relationship between the pressure applied to the resin and the pressure loss for a series of moulding shots in accordance with the present invention.

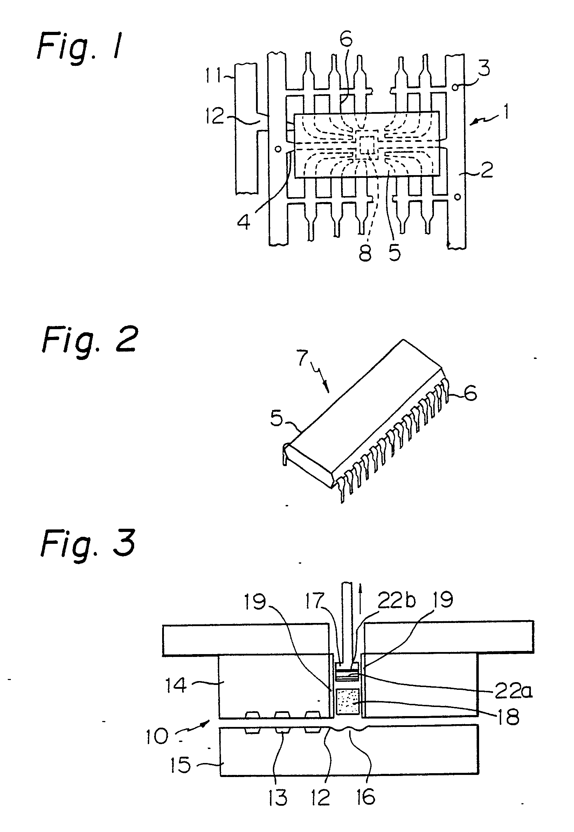

Before describing the preferred embodiments of the present invention an explanation will be given of a further piece of prior art. Referring to Figure 1, in the formation of a mould package 5, a lead frame 1 which bears a chip 8 wire bonded thereto is placed in a cavity provided in a mould. Molten resin, such as a thermosetting resin obtained by melting pellets is injected under pressure to the cavity through a runner 11 and a gate 12 of a lower mould. After moulding, the leads 6 of the package 5 are separated from the lead frame 1 and bent to the required shape. As a result, a mould-sealed type semiconductor device 7 as shown in Figure 2 is formed. Now, in Figure 1, reference numerals 2, 3, and 4 represent a cradle, pilot aperture, and pinch respectively.

Figure 3 is a schematic cross-sectional view of a transfer moulding apparatus used in the above process. In Figure 3, reference numeral 10 represents a mould consisting of a top half 14 and a bottom half 15, 12 a runner, 13 a cavity, 16 a cull which receives molten resin, 17 an injection plunger which presses thermosetting plastics resin pellets 18 (hereinafter referred to as merely resin), 19 a pot in which the injection plunger 17 carries out up-down movement, and 22a and 22b a lower groove and upper groove. Figure 3 shows only three cavities 13, however, in fact, about 10 to 200 cavities are provided in a mould.

In such a moulding apparatus, the resin 18 is melted by the heat from the mould 10, which has been heated to about 180°C, and by the pressure generated by the descent of the injection plunger 17 due to a driving device, for example, hydraulic device (not shown). The molten resin 18 is fed within the cavities 13 through the cull 16, runner 12, and a gate (not shown). When the molten resin 18 fills all cavities 13 the injection plunger 17 returns upwards to complete one stroke.

- The descent pressure of the injection plunger 17 is maintained at, for example, 60 kg/cm² to ensure complete filling of the cavities by the molten resin 18. The actual pressure of the resin 18, however, often does not remain at the predetermined level due to leakage of the molten resin between the injection plunger 17 and the inner wall of the pot 19 etc. This results in various problems.

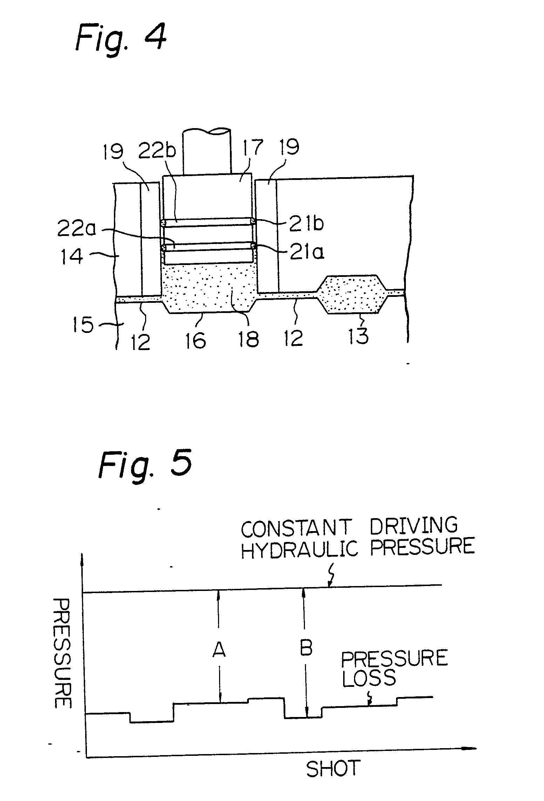

Figure 4 is a schematic cross-sectional view of the portion of the transfer moulding apparatus including the above injection plunger 17. Figure 4 shows the small space between the injection plunger 17 and the pot 19. When pressure is applied to the molten resin 18 by the descending injection plunger 17, some resin 18 enters the above space, thereby reducing the pressure.

Conventionally, to prevent the pressure loss, two grooves 22a and 22b are provided on the outer circumference of the injection plunger 17. Resin entering the space fills the lower groove 22a first. Since the resin is thermosetting, it hardens after the stroke to a close fit against the wall of the pot 19, thus forming an O-ring-shaped portion 21a. This O-ring-shaped portion 21a prevents much of the resin leakage in later strokes. Any resin leaking beyond the O-ring-shaped portion 21a fills the groove 22b to form an O-ring-shaped portion 21b. The double-sealing effect of the two grooves 22a and 22b in the injection plunger 17 effectively prevents resin leakage. At the same time, however, friction between the O-ring-shaped portions 21a and 21b in the grooves 22a and 22b and the wall of the pot 19 decreases the pressure applied to the resin 18 by the injection plunger 17.

The relationship between the pressure loss and shots, i.e., the number of injections of resin, is illustrated in Figure 5. In Figure 5 the pressures A and B are actual pressures of the resin per shot, corresponding to the difference between the fluctuating pressure loss and constant driving hydraulic pressure, e.g., 60 kg/cm². In the prior art, the pressures A and B have not been controlled to a constant level.

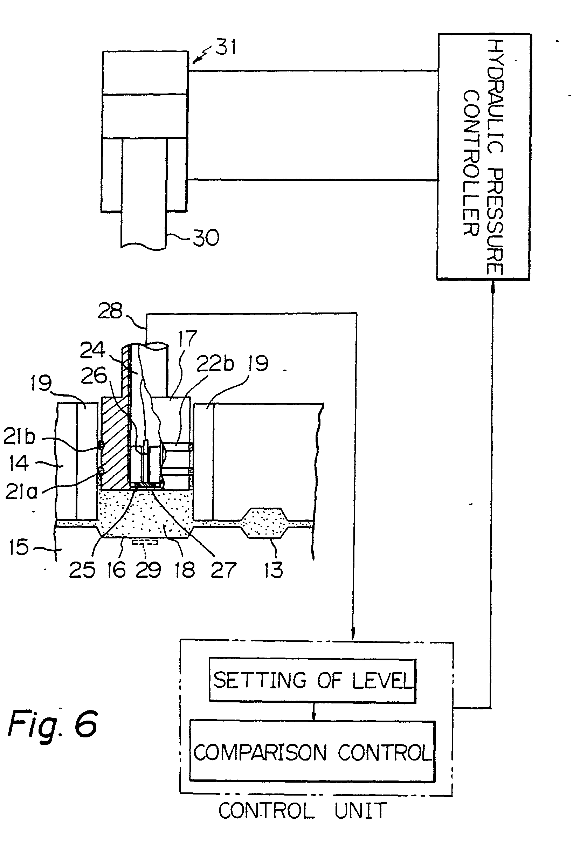

Figure 6 is a schematic view of an automatic transfer moulding apparatus, according to an embodiment of the present invention. The automatic transfer moulding apparatus comprises a mould 14, 15, an injection resin such as epoxy, or silicone, a hydraulic press 31 or other means for driving the plunger 17, a pressure-sensitive element 25, e.g. a strain gauge, or other means for detecting the internal pressure of the resin 18 in the mould 14, 15, and a control unit and hydraulic pressure controller or other means controlling the hydraulic pressure.

On the outer circumference of the injection plunger 17 are provided two grooves 21a and 22b, as in the prior art. A cylindrical cavity 24 is formed inside the injection plunger 17. The cylindrical cavity 24 penetrates the centre portion of the plunger 17 to an end position slightly spaced from the end surface 27 of the plunger 17 contacting the molten resin 18. The distance between the end position and the end surface 27 is suitably selected from a range of 0.5 to 1.0 mm in accordance with the size of the plunger 17 and the pressure applied to the resin 18. At the bottom of the cavity 24 is provided the pressure-sensitive element 25 and a converter 26. This bottom portion is extremely thin and easily deforms under pressure, which deformation is detected by the pressure-sensitive element 25. The converter 26 converts this to an electric signal. The conversion signal is input to the controller unit and is compared to a preset level of pressure. Then, the obtained signal in the controller unit is input to the hydraulic pressure controller.

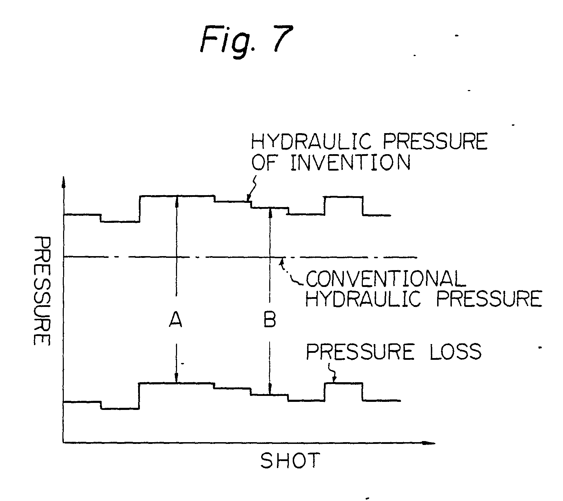

Consequently, the actual internal pressure of the molten resin in the pot 18 is always monitored. The injection pressure of the plunger is compensated according to the monitored pressure to automatically maintain a constant pressure of the resin 18. The relationship between the pressure of the resin and shots according to the present invention is shown in Figure 7.

As shown in Figure 7, the hydraulic pressure is compensated in accordance with the pressure loss. Thus, pressure A and B are maintained constant.

The above-mentioned transfer moulding method and apparatus can be used not only in the production of mould-sealed type semiconductor devices, but also for other articles obtained by using various devices wherein a transfer moulding operation is carried out.

The pressure-sensitive element may be provided below the bottom surface of the cull 16 as element 29. Two or more pressure-sensitive elements may also be provided. For example, one is provided in the lower portion of the plunger and other or others are provided in other portions of the pot.

# Claims

1. A transfer moulding method for moulding articles from a thermosetting resin in a mould (14, 15) having a plurality of cavities (13) and a pot (18) in communication with the cavities (13) comprising the steps of:

charging a thermosetting plastics resin into the pot (18);

transferring the thermosetting plastics resin from the pot (18) to each of the cavities (13) by applying a pressure to the resin by means of a plunger (17) which is movable in the pot (18);

directly detecting the internal pressure of the resin by detecting means (25, 29); and,

altering the pressure applied to the plunger (17) to move it in the pot in response to the internal pressure of the resin detected by the detecting means;

characterised in that the internal pressure of the resin is directly detected in the pot (13) by the detecting means (25, 29) and the pressure applied to the plunger (17) is varied upwards or downwards as necessary to compensate for friction between the plunger (17) and the wall of the pot (18) and maintain the internal pressure of the resin in the pot (18) substantially constant during the transferring step.

2. A method according to claim 1, wherein the thermosetting plastics resin is an epoxy resin or a silicone compound.

3. A method according to claim 1 or 2, wherein the internal pressure in the pot (18) is detected by a strain gauge (25, 29).

4. A method according to any one of the preceding claims, in which the articles being moulded are packages for semiconductor devices.

5. A transfer moulding apparatus comprising:

a mould (14, 15) having a plurality of cavities (13) and a pot (18) in communication with the cavities;

a plunger (17) movable in the pot for pressurising thermosetting plastics resin charged into the pot (18) and transferring the resin to the cavities (13);

driving means (30, 31) for applying a pressure to the plunger (17);

a pressure detector (25, 29) for detecting the internal pressure of the resin; and,

means for altering the pressure applied to the plunger (17) by the driving means (30, 31) in response to a signal from the detector;

characterised in that the detector (25, 29) detects the internal pressure of the resin in the pot (18) and the means for altering the pressure applied to the plunger (17) to control means which adjusts the pressure applied to the plunger (17) upwards or downwards in dependence upon the pressure detected by the detector to compensate for friction between the plunger (17) and the wall of the pot (18) and maintain the internal pressure of the resin in the pot (18) substantially constant while it is being transferred by movement of the plunger. -

6. An apparatus according to claim 5, wherein the driving means includes a hydraulic ram (31).

7. An apparatus according to claim 5 or 6, wherein the pressure detector is a pressure-sensitive element such as a strain gauge (25, 29).

8. An apparatus according to claim 5, 6 or 7, wherein a pressure detector (25) is provided in the plunger (17) adjacent its end face (27).

9. An apparatus according to claim 5, 6, 7 or 8, wherein a pressure detector (29) is provided adjacent an internal surface (16) of the pot and facing the end face (27) of the plunger (17).

## Patentansprüche

1. Verfahren zum Spritzpressen zum Formen von Gegenständen aus wärmehärtendem Harz in einer Form (14, 15), die eine Vielzahl von Hohlräumen (13) und einen mit den Hohlräumen (13) kommunizierenden Topf (18) hat, mit den folgenden Schritten:

Laden des wärmehärtenden Kunststoffharzes in den Topf (18);

Übertragen des wärmehärtenden Kunststoffharzes von dem Topf (18) zu jedem der Hohlräume (13) durch Anwendung eines Druckes auf das Harz mittels eines Kolbens (17), der in dem Topf (18) bewegbar ist;

direktes Fühlen des internen Druckes des Harzes durch Detektoreinrichtungen (25, 29); und Ändern des auf den Kolben (17) ausgeübten Druckes, um ihn in dem Topf in Abhängigkeit von dem inneren Druck des Harzes, der durch die Detektoreinrichtung gefühlt wird, zu bewegen;

dadurch gekennzeichnet, daß der innere Druck des Harzes durch die Detektoreinrichtung (25, 29) direkt in dem Topf (13) gefühlt wird und der dem Kolben (17) zugeführte Druck nach oben oder unten variiert wird, wie es erforderlich ist, um die Reibung zwischen dem Kolben (17) und der Wand des Topfes (18) zu kompensieren und um den inneren Druck des Harzes in dem Topf (18) während des Transferpreßschrittes im wesentlichen konstant zu halten.

2. Verfahren nach Anspruch 1, bei dem das wärmehärtende Harz ein Epoxydharz oder eine Siliconverbindung ist.

3. Verfahren nach Anspruch 1 oder 2, bei dem der innere Druck des Topfes (18) durch einen Dehnungsmesser (25, 29) gemessen wird.

4. Verfahren nach einem der vorhergehenden Ansprüche, bei dem die geformten Artikel Packungen für Halbleitervorrichtungen sind.

5. Spritzpreßvorrichtung mit:

einer Form (14, 15), die eine Vielzahl von Hohlräumen (13) und einen mit diesen Hohlräumen kommunizierenden Topf (18) umfaßt;

einem Kolben (17), der in dem Topf bewegbar ist, um das wärmehärtende Material, welches in den Topf (18) geladen ist, unter Druck zu setzen und das Harz in die Hohlräume (13) zu übertragen;

Antriebseinrichtungen (30, 31), um einen Druck auf den Kolben (17) auszuüben;

einem Druckdetektor (25, 29), um den inneren Druck des Harzes zu fühlen; und

Einrichtungen zum Ändern des dem Kolben (17) zugeführten Druckes durch die Antriebseinrichtungen (30, 31), in Abhängigkeit von einem Signal von dem Detektor;
dadurch gekennzeichnet, daß der Detektor (25, 29) den inneren Druck des Harzes in dem Topf (18) und der Einrichtung zur Änderung des Druckes, der dem Kolben (17) augeführt wird, fühlt, um die -Einrichtung, die den dem Kolben (17) zugeführten Druck einstellt, in Abhängigkeit von dem Druck nach oben oder unten zu steuern, der von dem Detektor gefühlt wird, um die Reibung zwischen dem Kolben (17) und der Wand des Topfes (18) zu kompensieren und den inneren Druck des Harzes in dem Topf (18) im wesentlichen konstant zu halten, während dieser durch die Bewegung des Kolbens übertragen wird.

6. Vorrichtung nach Anspruch 5, bei der die Antriebseinrichtung einen hydraulischen Kolben (31) umfaßt.

7. Vorrichtung nach Anspruch 5 oder 6, bei der der Druckdetektor ein druckempfindliches Element wie ein Dehnungsmesser (25, 29) ist.

8. Vorrichtung nach Anspruch 5, 6 oder 7, bei der der Druckdetektor (25) in dem Kolben (17) nahe seiner Stirnseite (27) vorgesehen ist.

9. Vorrichtung nach Anspruch 5, 6, 7 oder 8, bei der der Druckdetektor (29) nahe einer inneren Oberfläche (16) des Topfes und der Stirnseite (27) des Kolbens (17) zugewandt vorgesehen ist.

**Revendications**

1. Procédé de moulage par transfert pour mouler des objets d'une résine thermodurcissable dans un moule (14, 15) possédant des empreintes (13) et un pot (19) communiquant avec les empreintes (13), comprenant:

le chargement d'une résine de matière plastique thermodurcissable dans le pot (19);

le transfert de la résine thermodurcissable depuis le pot (19) à chacune des empreintes (13) en appliquant une pression à la résine au moyen d'un piston (17) qui est déplaçable dans le pot (19);

la détection directe de la pression de la résine par un moyen de détection (25, 29); et

le changement de la pression appliquée au piston (17), en vue de son déplacement dans le pot, en fonction de la pression de la résine détectée par le moyen de détection;

caractérisé en ce que la pression de la résine est détectée directement dans le pot (19) par le moyen de détection (25, 29) et que la pression appliquée au piston (17) est augmentée ou abaissée dans la mesure nécessaire pour compenser le frottement entre le piston (17) et la paroi du pot (19) et pour maintenir la pression de la résine dans le pot (19) sensiblement constante pendant l'opération de transfert.

2. Procédé selon la revendication 1, dans lequel la résine thermodurcissable est une résine époxy ou un composé silicone.

3. Procédé selon la revendication 1 ou 2, dans lequel la pression dans le pot (19) est détectée au moyen d'une jauge de contrainte (25, 29).

4. Procédé selon l'une quelconque des revendications précédentes, dans lequel le moulage consiste à enrober des dispositifs semi-conducteurs de résine thermodurcissable.

5. Appareil de moulage par transfert, comprenant:

un moule (14, 15) possédant des empreintes (13) et un pot (19) communiquant avec les empreintes;

un piston (17) déplaçable dans le pot pour la mise sous pression d'une résine de matière plastique thermodurcissable chargée dans le pot (19) et pour transférer la résine jusque dans les empreintes (13);

un dispositif d'actionnement (30, 31) pour appliquer une pression au piston (17);

un capteur de pression (25, 29) pour détecter la pression de la résine; et

un dispositif pour changer la pression appliquée au piston (17), par le dispositif d'actionnement (30, 31), en réponse à un signal du capteur;

caractérisé en ce que le capteur (25, 29) détecte la pression de la résine dans le pot (19) et le dispositif pour changer la pression appliquée au piston (17) comprend un dispositif de commande qui ajuste la pression appliquée au piston (17), vers le haut ou vers le bas, en fonction de la pression détectée par le capteur, de manière à compenser le frottement entre le piston (17) et la paroi du pot (19) et à maintenir la pression de la résine dans le pot (19) sensiblement constante pendant que la résine est transférée sous l'effet du mouvement du piston.

6. Appareil selon la revendication 5, dans lequel le dispositif d'actionnement comporte un vérin hydraulique (31).

7. Appareil selon la revendication 5 ou 6, dans lequel le capteur de pression est un élément sensible à la pression tel qu'une jauge de contrainte (25, 29).

8. Appareil selon la revendication 5, 6 ou 7, dans lequel un capteur de pression (25) est disposé à l'intérieur du piston (17), à proximité de sa face d'extrémité (27).

9. Appareil selon la revendication 5, 6, 7 ou 8, dans lequel un capteur de pression (29) est disposé près d'une surface interne (16) du pot, en regard de la face d'extrémité (27) du piston (17).

0 124 244

Fig. 1

Fig. 2

Fig. 3

1

# Fig. 4

# Fig. 5

*Fig. 6*

SETTING OF LEVEL

COMPARISON CONTROL

CONTROL UNIT

HYDRAULIC PRESSURE CONTROLLER

# Fig. 7

HYDRAULIC PRESSURE
OF INVENTION

CONVENTIONAL
HYDRAULIC PRESSURE

PRESSURE LOSS

PRESSURE

A    B

SHOT